Europäisches Patentamt

(19) European Patent Office

Office européen des brevets

(11) Publication number: **0 267 929 B1**

# EUROPEAN PATENT SPECIFICATION

(12)

(45) Date of publication of patent specification:
13.03.91 Bulletin 91/11

(51) Int. Cl.⁵: **G01T 1/00**, G01T 1/29

(21) Application number: 87902656.5

(22) Date of filing: 11.05.87

(86) International application number:
PCT/GB87/00309

(87) International publication number:
WO 87/07033 19.11.87 Gazette 87/25

(54) SCINTILLATING SHEET SENSOR APPARATUS.

(30) Priority: 09.05.86 GB 8611432

(43) Date of publication of application:
25.05.88 Bulletin 88/21

(45) Publication of the grant of the patent:
13.03.91 Bulletin 91/11

(84) Designated Contracting States:
CH DE FR GB LI SE

(56) References cited:
EP-A- 0 125 691
EP-A- 0 143 205

(56) References cited:
IEEE Transactions on Nuclear Science, vol.
NS-32, no. 1, February 1985, IEEE, (New York,
US), G.C. Bonazzola et al.: "Charge coupled
devices as autoradiography images", pages
567-570

(73) Proprietor: FLOR-HENRY, Michel
114 Dunstan Street
Netherfield, Nottingham NG4 2NZ (GB)

(72) Inventor: FLOR-HENRY, Michel
114 Dunstan Street
Netherfield, Nottingham NG4 2NZ (GB)

(74) Representative: Goodman, Christopher et al
Eric Potter & Clarkson St. Mary's Court St.
Mary's Gate
Nottingham NG1 1LE (GB)

## Description

This invention relates to an apparatus/assembly for sensing, recording and displaying the patterns of radioactivity in spots, zones or bands that represent the component constitutents of chemical or biological samples that have been subject to paper and thin layer chromatography or agarose or polyacrylamide gel electrophoresis and that have been subsequently treated as for conventional fluorography, e.g. by the impregnation of the thin layer with a scintillant.

In the quantative/qualitative and analytical analysis of chemical and biological compounds, radioactively labelled samples of the compound are frequently separated on the basis of their intrinsic or modified physiochemical properties chromatographically or by molecular sieving in agarose or polyacrylamide matrices. The resulting gel or paper strip or thin-layer plate must then be subjected to a variety of autoradiographic or fluorographic procedures for the detection of the distribution of the underlying radioactivity.

In both direct autoradiography and fluorography the pattern of radioactivity is recorded as an image on a photosensitive emulsion or film.

The disadvantage of this type of procedure is the length of time involved that is required for the image to be recorded, due to the usually low specific radioactivity of the sample components and the limitations of the photographic chemistry.

It is an object of the present invention to provide a device for sensing and recording the patterns of radioactivity in chemical or biological samples that have been subjected to for example paper and thin layer chromatography in a shorter time than with the above described prodedure.

An apparatus corresponding to the preamble of Claim 1 is shown from EP-A-0143205.

According to the present invention there is provided apparatus for sensing patterns of radioactivity in prepared biological samples characterised in that the fibres of the fibre optic matrix array are greater than 5 cm long such as to enable the CCD array to be held at a temperature lower than that of the biological sample.

In a preferred embodiment the present invention provides an assembly comprising a support for the chromatographic strip, thin-layer or gel and a light detecting sensor consisting of a panel of CCD's linked to circuits allowing the quantification of light quanta gathered and an analysis of their spatial distribution and storage and visual display and print-out of this data both numerically and pictorially. The panel of light detecting CCD's may consist either of an n×m array sufficiently coextensive with most chromatograms or gels that may be encounted or of a longitudinal fraction of a notional panel of the same dimensions, which is caused to scan laterally and thereby sweep out an equivalent data gathering area. The assembly may be provided with a light tight enclosure where required, e.g. around the assembly of support, sample object and scanner.

Embodiments of the invention will now be described by way of example with reference to the accompanying drawings in which :

Figure 1 diagrammatically shows in plan the essential features of the apparatus with a gel impregnated with scintillant in situ on the supporting plate ;

Figure 2 diagrammatically illustrates the positioning of the dried gel in relation to an n×m CCD array in the embodiment of Figure 1 ; and

Figure 3 diagrammatically illustrates an alternative embodiment utilizing a fibre optic matrix array.

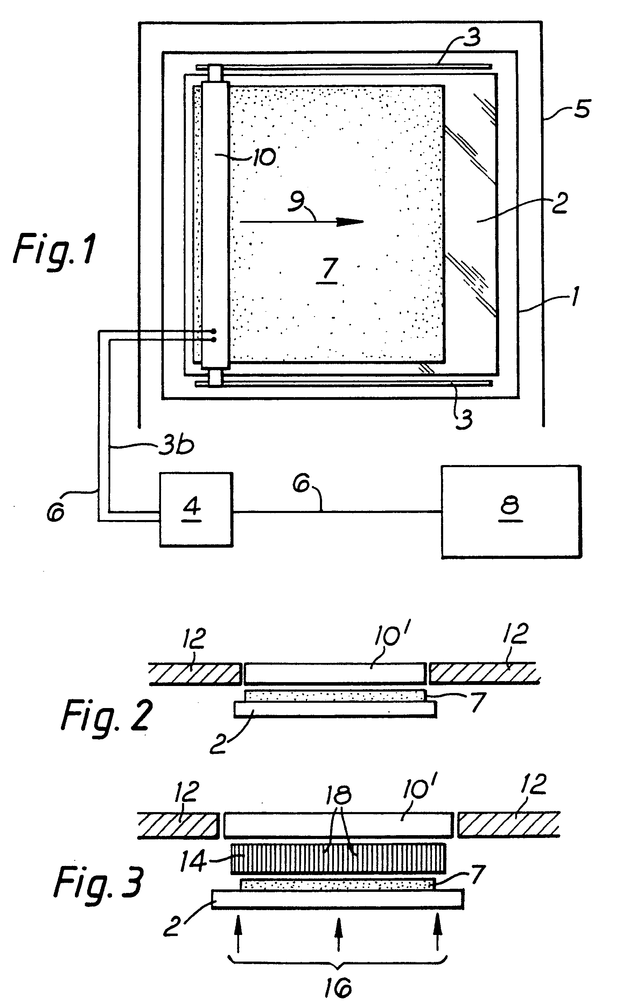

Referring to figure 1, the device comprises a body 1 in the form of a light tight box containing a supporting plate 2 for the gel 7 or chromatogram which may be secured by means of e.g., suction from beneath or by an overlying optically clear plate or by a suitably configured wire mesh, a frame for the support of the CCD light sensor array configured to hold the array as close as possible to the gel surface while still allowing freedom of movement of the array to scan laterally, in the embodiment illustrated, in conjunction with the electro-mechanical means for effecting the scan in a controlled fashion incorporated into the physical construction of the frame, i.e. guide rails 3 and a motor 3b linked to a servo-mechanism 4 communicating with the control program.

In other embodiments as shown in Figure 2 the frame would allow the direct contact of a more co-extensive n× m array 10' (n may be equal to m) by apposition of this array 10' with the gel or chromatogram surface 7. The CCD array 10' may be held in a suitable frame 12 may be lowered down onto the surface of the gel 7.

A light tight enclosure 5, preferably surrounds the CCD and gel to ensure no stray light affects the results. Data lines 6 are provided for communicating the data on light detection from the CCD array to the necessary storage and retrieval and display systems of the control package 8.

Where necessary electronic or electromechanical means are provided for causing the controlled lateral scan of the array in a fashion compatible with the requirements of the data collection package.

It is noted that 7 is sample sheet for illustration only and that arrow 9 represents the direction of initial scan. The scan may be repeated in one or both directions to accumlate data.

With reference now to Figure 3 in an alternative embodiment the gel 7 is again placed on a supporting plate 2. The CCD n×n detector array 10' is again held in a frame 12 but in addition, a fiber optic matrix 14 is interposed between the array 10' and the gel 7.

The n×m CCD array may for example comprise 250,000 pixels on an array 5 cm square and the fiber optic matrix 14 may comprise 250,000 short optical fibers suitably grouped together to transmit radiation emitted by the sample stimulated by light 16 from the gel 7 to the CCD array 10'.

The array 14 can be fairly deep providing for example a separation of 5, 10 cm or longer between the gel and the CCD array. This may be particularly advantageous if it is required to cool the CCD array to reduce spurious signals whilst also maintaining the gel at a higher temperature for ease of handling.

The fibers 18 within the matrix 14 are preferably of the best available optical transparency such that none of the photons emitted by the gel 7 are lost.

A fiber optic link can be used in the embodiment of Figure 1, one end of the fiber optic array being scanned across the surface of the sample gel and the other end being placed against the CCD 10 thereby allowing the CCD 10 array to remain static.

The CCD array may require for example to be cycled every 5 minutes for the more active samples but the time could be 60 minutes or longer for the less active samples. For additional accuracy a number of readings could be taken, but it may be seen that any particular sample can be analysed in a few hours at the most.

## Claims

1. Apparatus for sensing patterns of radioactivity in prepared biological samples, the apparatus comprising means for mounting a sample in a first position and including Charge Coupled Device (CCD) means mounted with respect to the sample for direct detection of the pattern within the sample in which the CCD means comprises an n×m array and includes a fibre optic matrix comprising a plurality of fibres, the fibres being arranged to transmit radiation from the sample to the CCD array, one end of each fibre in the matrix being in contact with the CCD array and the other end being in contact or very close proximity to the sample, characterised in that the fibres (18) of the fibre optic matrix array (14) are greater than 5 cm long such as to enable the CCD aray (10') to be held at a temperature lower than that of the biological sample (7).

2. Apparatus as claimed in Claim 1 in which the CCD means comprises an elongate detector and includes means for scanning the elongate detector along the sample.

3. Apparatus as claimed in Claim 1 including means for electronically storing the readout of the CCD means.

## Ansprüche

1. Apparatur zum Abtasten von Radioaktivitätsmustern in vorbereiteten biologischen Proben, wobei die Apparatur ein Halterungsmittel für eine Probe in einer ersten Position umfaßt und ein Ladungsspeicherelement (CCD)-Mittel, das in Bezug auf die Probe angebracht ist, zur direkten Erfassung des Musters in der Probe enthält, worin das CCD-Mittel eine n×m-Anordnung umfaßt und eine optische Glasfasermatrix enthält, die aus einer Vielzahl von Fasern besteht, wobei die Fasern so angeordnet sind, daß sie Strahlung von der Probe auf die CCD-Anordnung übertragen, wobei ein Ende jeder Faser in der Matrix mit der CCD-Anordnung in Kontakt steht und das andere Ende mit der Probe in Kontakt steht oder sich in ihrer unmittelbaren Nähe befindet, dadurch gekennzeichnet, daß die Fasern (18) der optischen Glasfasermatrix anordnung (14) mehr als 5 cm lang sind, so daß sie es möglich machen, daß die CCD-Anordnung (10') auf einer Temperatur gehalten werden kann, die niedriger ist als die der biologischen Probe (7).

2. Apparatur nach Anspruch 1, in der das CCD-Mittel einen länglichen Detektor umfaßt und ein Mittel zum Entlang fahren des Detektors an der Probe enthält.

3. Apparatur nach Anspruch 1, die ein Mittel zur elektronischen Speicherung der Ausgabe aus dem CCD-Mittel anfaßt.

## Revendications

1. Appareil pour détecter des motifs de radioactivité dans des échantillons biologiques préparés, l'appareil comprenant des moyens pour monter un échantillon dans une première position et comportant un dispositif à couplage de charge (DCC) monté par rapport à l'échantillon pour la détection directe du motif dans l'échantillon, dans lequel le dispositif DCC comprend un réseau n×m et comporte une matrice de fibres optiques comprenant une pluralité de fibres optiques, les fibres étant agencées pour transmettre le rayonnement de l'échantillon au réseau de DCC, une extrémité de chaque fibre dans la matrice étant en contact avec le réseau de DCC et l'autre extrémité étant au contact ou à proximité très étroite de l'échantillon, caractérisé en ce que les fibres (18) du réseau matriciel de fibres optiques (14) sont de plus de 5 cm en longueur, de façon à permettre que le réseau de DCC (10') soit maintenu à une température inférieure à celle de l'échantillon biologique (7).

2. Appareil suivant la revendication 1, dans lequel le dispositif DCC comprend un détecteur oblong et comporte des moyens pour balayer l'échantillon à l'aide du détecteur oblong.

3. Appareil suivant la revendication 1, comportant des moyens pour stocker électroniquement le signal de sortie du dispositif à DCC.

Fig.1

Fig. 2

Fig.3

4